# EUROPEAN PATENT SPECIFICATION

(11) **EP 2 934 201 B1**
(45) Date of publication and mention of the grant of the patent: **21.09.2016**
(21) Application number: 13814717.8
(22) Date of filing: 10.12.2013
(51) Int. Cl.: A24D 3/02, A24D 3/06, A24D 3/10, A24D 3/16, C08L 1/10

(54) **SURFACE ATTACHMENT OF PARTICLES TO CELLULOSE ESTER FIBERS**
OBERFLÄCHENHAFTUNG VON PARTIKELN AN CELLULOSEESTERFASERN
FIXATION DE SURFACE DE PARTICULES À DES FIBRES D'ESTER DE CELLULOSE

(30) Priority: 20.12.2012 US 201213722661
(43) Date of publication of application: 28.10.2015
(73) Proprietor: Eastman Chemical Company, Kingsport, TN 37660 (US)
(72) Inventor: STEACH, Jeremy, Kenneth, Kingsport, TN 37664 (US); LIU, Zhufang, Kingsport, TN 37660 (US); SUMNER, Charles, Edwan, Jr., Kingsport, TN 37664 (US); STEINMETZ, Guy, Ralph, Kingsport, TN 37663 (US)
(74) Representative: Brown, Fraser Gregory James
(86) International application number: PCT/US2013/074029
(87) International publication number: WO 2014/099468

(56) References cited:
- US-A- 3 403 690
- US-A- 5 970 988
- US-A1- 2008 245 376
- US-A1- 2011 143 067

## Description

### FIELD OF THE INVENTION

The invention generally relates to a method of attaching particles, such as metal oxides, to the surface of cellulose ester fibers.

### BACKGROUND OF THE INVENTION

Typical cigarette filters are made from a continuous-filament tow band of cellulose acetate-based fibers, called cellulose acetate tow, or simply acetate tow. The use of acetate tow to make filters is described in various patents, and the tow may be plasticized. See, for example, U.S. Patent No. 2,794,239.

The conversion of acetate tow into cigarette filters may be accomplished by means of a tow conditioning system and a plugmaker, as described, for example, in U.S. Patent No. 3,017,309. The tow conditioning system withdraws the tow from the bale, spreads and de-registers ("blooms") the fibers, and delivers the tow to the plugmaker. The plugmaker compresses the tow, wraps it with plugwrap paper, and cuts it into rods of suitable length. To further increase filter firmness, a non-volatile solvent may be added to solvent-bond the fibers together. These solvent-bonding agents are called plasticizers in the trade, and historically have included triacetin (glycerol triacetate), diethylene glycol diacetate, triethylene glycol diacetate, tripropionin, acetyl triethyl citrate, and triethyl citrate. Waxes have also been used to increase filter firmness. See, for example, U.S. Patent No. 2,904,050.

Conventional plasticizer bonding agents work well for bonding and selective filtration. However, plasticizers typically are not water-soluble, and the fibers will remain bonded over extended periods of time. In fact, conventional cigarette filters can require years to degrade and disintegrate when discarded, due to the highly entangled nature of the filter fibers, the solvent bonding between the fibers, and the inherent slow degradability of the cellulose acetate polymer. Attempts have, therefore, been made to develop cigarette filters having improved degradability.

Research Disclosure No. 38,626 (pp. 375-77, June 1996) reported that using plasticizers to form cigarette filters from acetate tow decreases the filters' degradation by holding the fibers together. The Disclosure, however, noted that simply omitting the plasticizer would not allow the filters to degrade rapidly in the environment due to fiber entanglement. To solve this problem, the Disclosure proposed fibers that would significantly reduce entanglement when wet.

U.S. application 2008/245376 discloses the application of particulate additive such as metal oxides in solutions, emulsions and dispersions to cellulose acetate filaments.

Despite recent efforts, there remains a need in the art for degradable cellulose ester fibers, such as those used in cigarette filters, and especially those that may be fabricated without using plasticizers or having reduced entanglement when wet.

The present invention aims to address this need as well as others, which will become apparent from the following description and the appended claims.

### SUMMARY OF THE INVENTION

The invention is as set forth in the appended claims.

Briefly, in one aspect, the present invention provides a method of attaching metal oxide particles to the surface of cellulose ester fibers. The method comprises contacting cellulose ester fibers with a mixture comprising metal oxide particles dispersed in a protic liquid to attach the metal oxide particles on the surface of the fibers. The mixture is substantially free of plasticizer.

In another aspect, the invention provides for cellulose ester fibers made by the method according to the invention.

In yet another aspect, the invention provides for a cigarette filter which comprises the cellulose ester fibers made by the method according to the invention.

### BRIEF DESCRIPTION OF THE DRAWINGS

Figure 1 shows an image from a scanning electron microscope (SEM) of the TiO₂ particles attached to the cellulose acetate fiber surface from Example 1.
Figure 2 shows an image from a SEM of the ZnO particles attached to the cellulose acetate fiber surface from Example 2.

### DETAILED DESCRIPTION OF THE INVENTION

It has been surprisingly discovered that particles, such as metal oxides, may be attached to the surface of cellulose ester fibers without the use of a plasticizer.

Thus, in one aspect, the present invention provides a method of attaching metal oxide particles to the surface of cellulose ester fibers. The method comprises contacting cellulose ester fibers with a mixture comprising metal oxide particles dispersed in a protic liquid to attach the metal oxide particles on the surface of the fibers. The mixture is substantially free of plasticizer.

As used herein, the term "plasticizer" is intended to describe a solvent that, when applied to cellulose ester fibers, solvent-bonds the fibers together. Examples of plasticizers include triacetin (glycerol triacetate), diethylene glycol diacetate, triethylene glycol diacetate, tripropionin, acetyl triethyl citrate, triethyl citrate, and mixtures thereof with one or more polyethylene glycols. By "substantially free," it is meant that a plasticizer is not present in an amount that appreciably hinders the rate of degradation of the cellulose ester fibers compared to the rate of fiber degradation in the absence of the plasticizer. Preferably, the mixture is free of plasticizer.

The metal oxide particles that may be used in the present invention is not particularly limiting. The metal of the metal oxide may be selected from Groups 1-16 of the Periodic Table of Elements. Preferred metals for the metal oxides include titanium, zinc, and aluminum. The metal oxides may be mono-metal or mixed metal oxides, such as a bimetal oxide.

A preferred class of metal oxides particles includes those that are photoactive agents. As used herein, the term "photoactive agent" refers to an agent that, when applied to a cellulose ester fiber, increases the rate at which the fiber degrades upon exposure to UV radiation. Photoactive agents useful according to the invention include titanium dioxides, although other photoactive metals or metal compounds may likewise be used. The titanium dioxide particles may be in rutile or anatase form, or a mixture of the two crystalline forms in the same particle. The amount of anatase phase present in the mixed-phase particles may vary, for example, from 2 to 98 wt%, from 15 to 95 wt%, or from 50 to 95 wt%, as measured using x-ray diffraction techniques. The rutile phase in the mixed-phase particles may likewise vary in a similar manner, for example, from 2 to 98 wt%, from 15 to 95 wt%, or from 50 to 95 wt%, as measured using x-ray diffraction techniques. These mixed-phase particles are especially suitable at enhancing fiber degradation.

The titanium dioxide particles may be prepared by a variety of methods known in the art, including high-temperature hydrolysis. The particles may also be obtained commercially.

The metal oxide particles for use in the present invention may vary in size, for example, from 1 nm to 50 microns in diameter. Preferred metal oxide particle diameters include, for example, from 1 nm to 250 nm and from 5 to 50 nm.

The surface area of the metal oxide particles may also vary over a wide range, such as, for example, from 1 to 400 m²/g, as measured by the BET surface area method. Preferably, the particles have a surface area in the range of, for example, 10 to 300 m²/g or 10 to 150 m²/g.

The protic liquid for use in the present invention may be any compound that has a hydrogen atom bonded to an oxygen, provided that it does not dissolve the cellulose ester fibers. Examples of protic liquids include water, most alcohols, formic acid, and acetic acid. Water, lower alcohols (e.g., those containing C₁-C₄), and mixtures thereof are preferred protic liquids. Examples of the lower alcohols include methanol, ethanol, isopropanol, and n-butanol.

The mixture comprising metal oxide particles dispersed in the protic liquid may be prepared in any matter. For example, the metal oxide particles may be added to the protic liquid, and the mixture may be shaken, stirred, or sonicated to disperse the particles in the liquid.

The amount of metal oxide particles dispersed in the protic liquid may vary over a wide range. For example, the mixture may contain from 1 to 1,000 ppm of the metal oxide particles. As another example, the mixture may contain from 10 to 500 ppm of the metal oxide particles.

According to the method of the invention, the cellulose ester fibers are brought into contact with the mixture for a sufficient amount of time for the particles to deposit or attach themselves on the surface of the fibers. The contact time may vary over a wide range, for example, from 1 second to 1 hour. The contacting step may be carried out in any manner. For example, the fibers may be dipped into the mixture and allowed to soak for a desired amount of time. Alternatively, the fibers may be pulled through the mixture until a desired amount of particles are deposited on the fibers.

As used herein, the term "cellulose ester fiber" means a fiber formed from one or more cellulose esters, such as cellulose acetate, for example, by melt-spinning or solvent-spinning. The cellulose esters useful in the present invention include cellulose acetates, cellulose propionates, and cellulose butyrates with varying degrees of substitution, as well as mixed esters of these, e.g., cellulose acetate propionate, cellulose acetate butyrate, and cellulose acetate propionate butyrate. The cellulose ester may be a secondary cellulose ester. Examples of suitable cellulose esters include those described in U.S. Patent Nos. 1,698,049; 1,683,347; 1,880,808; 1,880,560; 1,984,147; 2,129,052; and 3,617,201.

Although cigarette filters are traditionally made with cellulose acetate fibers, the invention is not limited to traditional esters or to cigarette filters. Further, while the typical degree of substitution per anhydroglucose unit (DS/AGU) of acetate for cigarette filters is about 2.45, filters may be readily constructed with a range of acetyl levels, such as from 1.5 to 2.8, or from 1.8 to 2.7, or from 1.9 to 2.5, or for example, an average DS/AGU of about 2.0. Lower DS/AGU values may provide faster degradation.

As noted, the cellulose ester can be spun into fiber, for example, by melt-spinning or by spinning from an appropriate solvent (e.g., acetone, acetone/water, tetrahydrofuran, methylene chloride/methanol, chloroform, dioxane, N,N-dimethylformamide, dimethylsulfoxide, methyl acetate, ethyl acetate, or pyridine). When spinning from a solvent, the choice of solvent depends upon the type of ester substituent and upon the desired DS/AGU. A suitable solvent for spinning fiber is acetone containing from 0 to 30 wt% of water. For cellulose acetate having a DS/AGU of 2.4 to 2.6, the spinning solvent can be acetone containing less than 3 wt% water. For cellulose acetate having a DS/AGU of 2.0 to 2.4, the spinning solvent can be acetone containing 5-15 wt% of water. For cellulose acetate having a DS/AGU of 1.7 to 2.0, the spinning solvent can be acetone containing 15-30 wt% of water.

When melt-spinning fibers, the cellulose ester may have a melt temperature, for example, from 120ºC to 250ºC, or from 180ºC to 220ºC.

The cellulose ester fibers for use in the present invention may be continuous fibers, or may be staple fibers having a shorter length, rendering the fibers more susceptible to degradation. Thus, the staple fibers may have a length from 3 to 10 mm, or from 4 to 8 mm. The staple fibers may likewise be randomly oriented.

The cellulose ester fibers may be crimped and have, for example, from 4-20 crimps per inch, or from 10 to 15 crimps per inch. The fibers may have a denier/filament (DPF), for example, of 20-0.1, or from 5-1.5 DPF. For processing, the fibers may optionally contain lubricants or processing aids such as mineral oil, used in an amount from 0.1 to 3%, or from 0.3 to 0.8% by weight.

After contacting the fibers with the mixture of metal oxide particles and protic liquid, liquid on the surface of the fibers may be removed. This optional removal step may be performed in any manner. For example, the excess liquid may be allowed to drain off of the fibers. The excess liquid may also be wiped off or pressed off of the fibers. The excess liquid may also be removed by evaporation, optionally at elevated temperature such as in an oven at 50 to 100ºC. Any of these techniques may be used in combination to remove excess liquid from the fibers.

If the fibers have excess or unattached metal oxide particles on their surface, those particles may optionally be removed. The excess or unattached particles may be removed by any manner. For example, the fibers may be contacted with a protic liquid without metal oxide particles or with a lower concentration of metal oxide particles than the original treating mixture. The excess particles may also be removed by motion, such as centrifugal or vibratory. Any of these techniques may be used in combination to remove excess, loosely attached, or unattached particles from the fibers, if desired.

Optionally, in lieu of or in addition to the preceding post-contacting steps, the fibers may be dried to produce finished fibers with metal oxide particles attached to their surface. Residual liquid in the fibers may be removed in this step. The drying step may be performed in any matter. Preferably, the fibers are dried in an oven at elevated temperatures such as from 50 to 150ºC.

Any desired amount of the metal oxide particles may be attached to the surface of the fibers using the method of the invention. For example, the finished fibers may contain from 0.01 to 10 wt% of metal oxide particles, while other amounts are possible.

In another aspect, the invention relates to cellulose ester fibers prepared using the method of the invention. In one embodiment, the fibers are free of plasticizer.

The fibers produced according to the invention are particularly useful in cigarette filters. The fibers according to the invention may be formed into cigarette filters according to methods known in the art.

As used herein, the indefinite articles "a" and "an" mean one or more, unless the context clearly suggests otherwise. Similarly, the singular form of nouns includes their plural form, and vice versa, unless the context clearly suggests otherwise.

While attempts have been made to be precise, the numerical values and ranges described herein should be considered to be approximations. These values and ranges may vary from their stated numbers depending upon the desired properties sought to be obtained by the present invention as well as the variations resulting from the standard deviation found in the measuring techniques. Moreover, the ranges described herein are intended and specifically contemplated to include all sub-ranges and values within the stated ranges. For example, a range of 50 to 100 is intended to include all values within the range including sub-ranges such as 60 to 90 and 70 to 80.

This invention can be further illustrated by the following examples of preferred embodiments thereof, although it will be understood that these examples are included merely for purposes of illustration and are not intended to limit the scope of the invention. Unless otherwise indicated, all percentages are by weight.

### EXAMPLES

### General Surface Attachment Procedure

The cellulose acetate fiber samples with surfaced attached metal oxide particles were prepared by weighing 1 gram of cellulose acetate tow. A 0.01 % w/w mixture of metal oxide particles in a protic liquid was prepared. The mixture was sonicated for 30 minutes to disperse the particles in the liquid. The cellulose acetate tow with no additive was added to the mixture and allowed to soak for 30 minutes. Tow samples were removed from the dispersion, and the excess water was drained off the sample. The tow was then transferred to a 75ºC oven. The samples were left in the oven for 1 hour. After 1 hour, the samples were removed from the oven and placed in deionized H₂O. The samples were sonicated for 30 minutes so as to remove excess or unattached particles from the surface of the cellulose acetate fibers. After sonicating, the fibers were transferred to an oven at 100ºC. The cellulose acetate tow was left in the oven until dry.

### Example 1

Evonik/Degussa P25 TiO₂ particles were dispersed in Nanopure H₂O (18MΩ.cm) and attached to the surface of cellulose acetate fibers according to the general procedures described above.

The P 25 TiO₂ particles were an ultrafine-size, uncoated mixed-phase TiO₂ having an average particle size of about 20 nm.

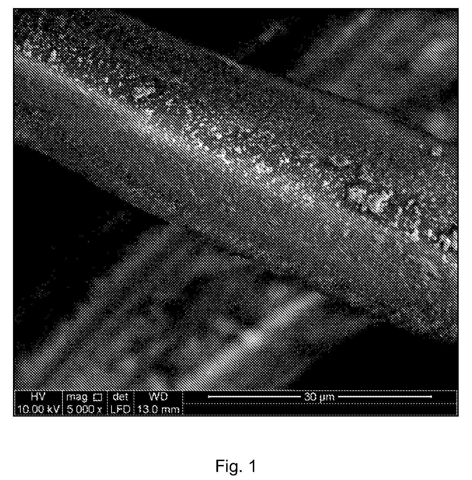

Figure 1 shows an image from a scanning electron microscope (SEM) of the P25 TiO₂ particles attached to the cellulose acetate fiber surface from Example 1.

### Example 2

ZnO particles were dispersed in isopropanol and attached to the surface of cellulose acetate fibers according to the general procedures described above.

The ZnO particles were obtained from Aldrich and had an average particle size of less than 1 micron.

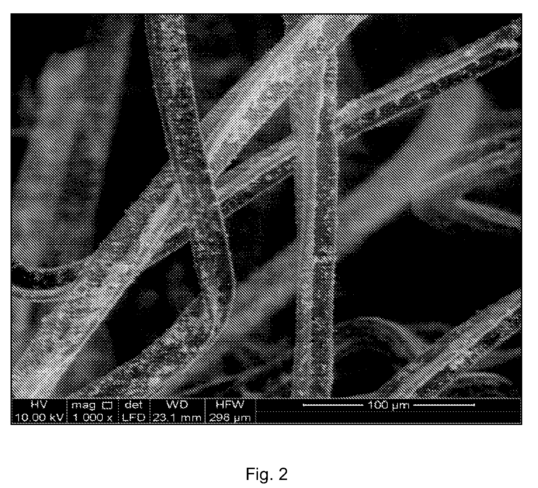

Figure 2 shows an image from a SEM of the ZnO particles attached to the cellulose acetate fiber surface from Example 2.

### Examples 3-6

### Photodegradation Testing of Surface Attached Evonik/Degussa P25 TiO₂ Particles

To test photodegradation of the cellulose acetate fibers with the surface attached Evonik/Degussa P25 TiO₂ particles, the samples were placed in a benchtop weatherometer. The weatherometer parameters were set as follows:
o SunTest CPS+ calibrated to have an irradiance value of 0.35 ± 0.05 W/cm² and a temperature value of 55 ± 3°C during testing. Calibration checked weekly.
∘ Sample exposure program:
   - Light Sequence - 702 minutes with Xe lamp on with heat control activated
   - Prior to flood sequence - four 16 mm stainless balls are added to cups and placed on a orbital shaker as a agitation step
   - Flood sequence - 18 minutes with lamp off

Examples 3-6 below were tested in the weatherometer.

### Example 3 (Comparative)

Acetate tow was made with cellulose acetate fibers containing no pigment in the fibers. The weathering results are shown in Table 1.

### Example 4 (Comparative)

Acetate tow was made with cellulose acetate fibers containing pigment size (∼200 nm) and coated TiO₂ particles (Kronos 1071) in the fibers. This example was prepared to understand the effect of size and coating of the TiO2 on photodegradation. The weathering results are shown in Table 1.

### Example 5

Acetate tow was made with cellulose acetate fibers containing no pigment in the fibers with photoactive TiO₂ particles (Degussa Evonik P25) attached to the fiber surface using the general procedures described above. The TiO₂ particles used in this example were an ultrafine size and uncoated mixed-phase TiO₂. The weathering results are shown in Table 1.

### Example 6

Acetate tow was made with cellulose acetate fibers containing pigment size (∼200 nm) and coated TiO₂ (Kronos 1071) in the fibers with photoactive TiO₂ particles (Degussa Evonik P25) attached to the fiber surface using the general procedures described above. The TiO₂ particles used in this example were an ultrafine size and uncoated mixed-phase TiO₂.

This example was prepared to understand the effect of size and coating of the TiO₂ particles on photodegradation, and how photoactive TiO₂ on the surface can change the rate of photodegradation. The weathering results are shown in Table 1.

**Table 1**

| **Example No.** | **3 (Comparative)** | **5** | **4 (Comparative)** | **6** |
|---|---|---|---|---|
| **Time** (Weeks) | **Weight Lost** (%) | **Weight Lost** (%) | **Weight Lost** (%) | **Weight Lost** (%) |
| 0 | 0 | 0 | 0 | 0 |
| 1 | 0.3 | 12.9 | 0.5 | 10.8 |
| 2 | 1.2 | 27.2 | 1.5 | 23.5 |
| 3 | 2.6 | 40.5 | 3.3 | 35.6 |
| 4 | 6.2 | 52.3 | 5.9 | 45.1 |
| 5 | 15.3 | 61.2 | 10.0 | 52.7 |
| 6 | 33.5 | 67.2 | 15.3 | 60.4 |

As shown in Table 1, the two different acetate tows without the surface attached (Examples 3 and 4) did not degrade as fast the comparable acetate tows with the photoactive TiO₂ attached to the fiber surface. After 6 weeks, Example 3 displayed a weight loss of 33%, while Example 5 showed a 67% weight loss. After 6 weeks, Example 4 displayed a weight loss of 15%, while Example 6 had a weight loss of 60%.

The data in Table 1 show that adding the photoactive TiO₂ to the fiber surface according to the invention can increase the degradation rate of conventional acetate tow.

### Example 7

### Stability Testing of Surface Attached Particles

Cellulose acetate fiber samples with surfaced attached particles were prepared according to the general procedures described above to determine the stability of the particles on the fiber surface. Four fiber samples were prepared with TiO₂ particles, while another four fiber samples were prepared with ZnO particles. The surface-attached fiber samples were placed in individual beakers of water and placed in a sonicator. The samples were then sonicated up to 5 hours. The samples were then analyzed by ICP-OES to determine Zn and Ti content on the fibers. The results of the ICP-OES analysis for the sonicated samples are shown in Table 2.

**Table 2**

| **Sonication Time** (hrs) | **Concentration of TiO₂ Particles on Fiber Sample** (wt%) | **Concentration of ZnO Particles on Fiber Sample** (wt%) |
|---|---|---|
| 0 | 1.36 | 3.37 |
| 1 | 1.66 | 5.08 |
| 3 | 1.50 | 6.78 |
| 5 | 1.39 | 7.93 |

The data in Table 2 show that essentially no change was found for the concentration of TiO₂ and ZnO particles attached to the surface of the cellulose acetate fibers after 5 hours of sonication.

The invention has been described in detail with particular reference to preferred embodiments thereof, but it will be understood that variations and modifications can be effected within the spirit and scope of the invention.

## Claims

1. A method of attaching metal oxide particles to the surface of cellulose ester fibers, comprising:
contacting cellulose ester fibers with a mixture comprising metal oxide particles dispersed in a protic liquid to attach the metal oxide particles on the surface of the fibers,
wherein the mixture is substantially free of plasticizer.

2. The method according to claim 1, wherein the protic liquid is water, alcohol, or mixtures thereof.

3. The method according to any of claims 1-2, wherein the metal oxide particles comprise mono-metal oxides or bi-metal oxides.

4. The method according to any of claims 1-3, wherein the metal oxide particles are photoactive.

5. The method according to claim 4, wherein the metal oxide particles comprise rutile titanium dioxide or anatase titanium dioxide, or mixtures of rutile titanium dioxide and anatase titanium dioxide.

6. The method according to claim 4, wherein the metal oxide particles comprise mixed-phase titanium dioxide particles.

7. The method according to claim 6, wherein the mixed-phase titanium dioxide particles comprise an anatase phase in an amount ranging from 50 to 98 wt% and a rutile phase in an amount ranging from 2 to 50 wt%.

8. The method according to any of claims 1-7, wherein the metal oxide particles have a diameter of 1 nm to 50 microns, or a diameter of 1 nm to 250 nm, or a diameter of 5 nm to 50 nm. have.

9. The method according to any of claims 1-8, wherein the metal oxide particles have a surface area of 1 to 400 m²/g, or a surface area of 10 to 350 m²/g, or a surface area of 10 to 150 m²/g.

10. The method according to any of claims 1-9, wherein after the contacting step, the fibers comprise from 0.01 to 10 wt% of the metal oxide particles.

11. The method according to any of claims 1-10, wherein the cellulose ester fibers comprise cellulose acetate fibers, cellulose propionate fibers, cellulose butyrate fibers, cellulose acetate propionate fibers, or cellulose acetate butyrate fibers.

12. The method according to any of claims 1-11, which further comprises:
dispersing the metal oxide particles in the protic liquid to form the mixture;
removing at least a portion of the protic liquid from the surface of the fibers after contacting the fibers with the mixture;
removing at least a portion of excess or unattached metal oxide particles from the surface of the fibers; and
drying the fibers to obtain finished cellulose ester fibers with attached metal oxide particles.

13. Cellulose ester fibers produced according to the method of any of claims 1-12.

14. The cellulose ester fibers according to any of claims 1-12, which are substantially free of plasticizer.

15. A cigarette filter which comprises the cellulose ester fibers according to claims 13 or 14.

## Patentansprüche

1. Verfahren zum Anbinden von Metalloxid-Teilchen an die Oberfläche von Celluloseester-Fasern, umfassend:
Inkontaktbringen der Celluloseester-Fasern mit einer Mischung, umfassend Metalloxid-Teilchen, dispergiert in einer protischen Flüssigkeit, um die Metalloxid-Teilchen an die Oberfläche der Fasern anzubinden,
wobei die Mischung im Wesentlichen frei von Weichmachern ist.

2. Verfahren nach Anspruch 1, wobei die protische Flüssigkeit Wasser, Alkohol oder Mischungen davon ist.

3. Verfahren nach irgendeinem der Ansprüche 1-2, worin die Metalloxid-Teilchen Mono-Metalloxide oder Bi-Metalloxide umfassen.

4. Verfahren nach irgendeinem der Ansprüche 1-3, wobei die Metalloxid-Teilchen photoaktiv sind.

5. Verfahren nach Anspruch 4, wobei die Metalloxid-Teilchen Rutil-Titandioxid oder Anatas-Titandioxid oder Mischungen aus Rutil-Titandioxid und Anatas-Titandioxid umfassen.

6. Verfahren nach Anspruch 4, wobei die Metalloxid-Teilchen gemischt-Phasen Titandioxid-Teilchen umfassen.

7. Verfahren nach Anspruch 6, wobei die gemischt-Phasen Titandioxid-Teilchen eine Anatas-Phase in einer Menge in einem Bereich von 50 bis 98 Gew.-% und eine Rutil-Phase in einer Menge in einem Bereich von 2 bis 50 Gew.-% umfassen.

8. Verfahren nach irgendeinem der Ansprüche 1-7, wobei die Metalloxid-Teilchen einen Durchmesser von 1 nm bis 50 Mikrometer, oder einen Durchmesser von 1 nm bis 250 nm oder einen Durchmesser von 5 nm bis 50 nm haben.

9. Verfahren nach irgendeinem der Ansprüche 1-8, wobei die Metalloxid-Teilchen eine Oberfläche von 1 bis 400 m²/g oder eine Oberfläche von 10 bis 350 m²/g oder eine Oberfläche von 10 bis 150 m²/g haben.

10. Verfahren nach irgendeinem der Ansprüche 1-9, wobei nach dem Schritt des Inkontaktierens die Fasern von 0,01 bis 10 Gew.-% der Metalloxid-Teilchen aufweisen.

11. Verfahren nach irgendeinem der Ansprüche 1-10, wobei die Celluloseester-Fasern Celluloseacetat-Fasern, Cellulosepropionat-Fasern, Cellulosebutyrat-Fasern, Celluloseacetatpropionat-Fasern oder Celluloseacetatbutyrat-Fasern umfassen.

12. Verfahren nach irgendeinem der Ansprüche 1-11, weiterhin umfassend:
Dispergieren der Metalloxid-Teilchen in der protischen Flüssigkeit, um eine Mischung zu bilden;
Entfernung mindestens eines Teils der protischen Flüssigkeit von der Oberfläche der Fasern nach dem Inkontaktbringen der Fasern mit der Mischung;
Entfernung mindestens eines Teils des Überschusses oder nicht-gebundener Metalloxid-Teilchen von der Oberfläche der Fasern und
Trocknung der Fasern, um fertiggestellte Celluloseester-Fasern mit anhängenden Metalloxid-Teilchen zu erhalten.

13. Celluloseester-Fasern hergestellt nach einem Verfahren gemäß irgendeinem der Ansprüche 1-12.

14. Celluloseester-Fasern nach irgendeinem der Ansprüche 1-12, die im Wesentlichen frei von Weichmachern sind.

15. Zigarettenfilter, der die Celluloseester-Fasern gemäß Anspruch 13 oder 14 umfasst.

## Revendications

1. Procédé de fixation de particules d'oxyde métallique à la surface de fibres d'ester de cellulose, comprenant :
La mise en contact de fibres d'ester de cellulose avec un mélange comprenant des particules d'oxyde métallique dispersées dans un liquide protique pour fixer les particules d'oxyde métallique sur la surface des fibres,
le mélange étant sensiblement exempt de plastifiant.

2. Procédé selon la revendication 1, dans lequel le liquide protique est de l'eau, un alcool ou un mélange de ceux-ci.

3. Procédé selon l'une quelconque des revendications 1 et 2, dans lequel les particules d'oxyde métallique comprennent des oxydes mono-métalliques ou des oxydes bi-métalliques.

4. Procédé selon l'une quelconque des revendications 1 à 3, dans lequel les particules d'oxyde métallique sont photo-actives.

5. Procédé selon la revendication 4, dans lequel les particules d'oxyde métallique comprennent du dioxyde de titane rutile ou du dioxyde de titane anatase, ou des mélanges de dioxyde de titane rutile et de dioxyde de titane anatase.

6. Procédé selon la revendication 4, dans lequel les particules d'oxyde métallique comprennent des particules de dioxyde de titane à phase mixte.

7. Procédé selon la revendication 6, dans lequel les particules de dioxyde de titane à phase mixte comprennent une phase anatase dans une quantité se situant dans la plage de 50 à 98 % en poids et une phase rutile dans une quantité se situant dans la plage de 2 à 50 % en poids.

8. Procédé selon l'une quelconque des revendications 1 à 7, dans lequel les particules d'oxyde métallique ont un diamètre de 1 nm à 50 microns, ou un diamètre de 1 nm à 250 nm, ou un diamètre de 5 nm à 50 nm.

9. Procédé selon l'une quelconque des revendications 1 à 8, dans lequel les particules d'oxyde métallique ont une surface spécifique de 1 à 400 m²/g, ou une surface spécifique de 10 à 350 m²/g, ou une surface spécifique de 10 à 150 m²/g.

10. Procédé selon l'une quelconque des revendications 1 à 9, dans lequel, après l'étape de mise en contact, les fibres comprennent de 0,01 à 10 % en poids des particules d'oxyde métallique.

11. Procédé selon l'une quelconque des revendications 1 à 10, dans lequel les fibres d'ester de cellulose comprennent les fibres d'acétate de cellulose, les fibres de propionate de cellulose, les fibres de butyrate de cellulose, les fibres d'acétate propionate de cellulose ou les fibres d'acétate butyrate de cellulose.

12. Procédé selon l'une quelconque des revendications 1 à 11, qui comprend en outre :
disperser les particules d'oxyde métallique dans le liquide protique pour former le mélange ;
retirer au moins une partie du liquide protique à partir de la surface des fibres après mise en contact des fibres avec le mélange ;
retirer au moins une partie des particules d'oxyde métallique en excès ou non fixées à partir de la surface des fibres ; et
sécher les fibres pour obtenir des fibres d'ester de cellulose finies avec des particules d'oxyde métallique fixées.

13. Fibres d'ester de cellulose obtenues conformément au procédé de l'une quelconque des revendications 1 à 12.

14. Fibres d'ester de cellulose selon l'une quelconque des revendications 1 à 12, qui sont sensiblement exemptes de plastifiant.

15. Filtre de cigarette qui comprend les fibres d'ester de cellulose selon l'une des revendications 13 ou 14.
